# DEMANDE DE BREVET EUROPEEN

(11) **EP 4 593 401 A1**
(43) Date de publication de la demande: **30.07.2025**
(21) Numéro de dépôt: 25153174.5
(22) Date de dépôt: 21.01.2025
(51) Int. Cl.: H04N 21/4402

(54) **GESTION OPTIMISÉE DES FICHIERS MANIFESTES POUR CLIENTS DE TÉLÉCOMMUNICATIONS RECEVANT DES CONTENUS ADAPTATIFS SUR HTTP (HAS)**

(30) Priorité: 25.01.2024 FR 2400736
(71) Demandeur: Orange, 92130 Issy-les-Moulineaux (FR)
(72) Inventeur: MARCHAND, Hervé, 92326 CHATILLON CEDEX (FR); GASTE, Olivier, 92326 CHATILLON CEDEX (FR)
(74) Mandataire: Regimbeau

(57) **Abrégé**

Procédé de gestion de l'accès par un client (C) à un contenu disponible sur au moins un serveur (S) à travers un réseau de télécommunications (N), ledit contenu étant temporellement segmenté en une séquence de blocs de données, ledit procédé comprenant une transmission par ledit serveur d'un fichier (F) associant des segments de temps à des identifiants de blocs de données, ainsi qu'une action sélectionnée parmi une génération par ledit client au sein dudit fichier d'au moins un identifiant de bloc associé à un segment de temps et une transmission d'une requête vers ledit serveur pour recevoir à nouveau ledit fichier (F).

## Description

### DOMAINE TECHNIQUE

La présente invention est relative à la distribution de contenus, notamment de contenus audio-visuels, à travers de réseaux de télécommunications vers des clients finaux en vue de leur production pour des utilisateurs. Elle concerne plus particulièrement la diffusion de contenus temporellement segmentés en séquences de blocs de données, ou *« chunks* » en anglais, éventuellement en plusieurs résolutions. Elle s'applique notamment à la diffusion basée sur des technologies telles que HAS (« *Http Adaptive Streaming* », en anglais, pour Diffusion adaptative par http).

Dans ce type de technologies, les clients doivent récupérer des fichiers contenant des identifiants des différents blocs de données constitutifs du contenu auquel il souhaite accéder. Ces identifiants contiennent les données permettant au client de pouvoir récupérer, individuellement, chaque bloc de données, éventuellement dans la résolution souhaitée.

Lorsque le contenu est en cours de production, par exemple parce qu'il s'agit d'une diffusion en direct qui n'est pas terminé au moment où l'utilisateur y accède, le client doit périodiquement récupérer ce fichier afin d'obtenir les identifiants des nouveaux blocs de contenu produits.

Lorsqu'une fonction de lecture en différé, le client doit pouvoir accéder à des blocs de données correspondant à des segments temporels dans le passé. Aussi, une longue période de temps doit être représentée, dans le fichier récupéré par le client, correspondant à un très grand nombre de blocs de données. Même si le fichier ne contient que des identifiants des blocs de données, c'est-à-dire l'information permettant au client de les récupérer, la taille du fichier peut être considérable.

Par exemple, si l'on souhaite permettre aux utilisateurs de remonter 4 heures dans le passé en lecture en différé, et si les blocs de données correspondent à des segments temporels de 2 secondes, le fichier doit contenir 7200 identifiants par résolution proposée. Compte tenu de la taille de chaque identifiant, on obtient un fichier d'environ 200 Ko.

Récupérer régulièrement ce fichier engendre donc un encombrement de la bande passante entre le serveur de contenu et le client, et conséquemment, du réseau de télécommunication. Il est à noter que, dans certains systèmes déployés commercialement, le fichier est récupéré selon un rythme correspondant à la production (et à la consommation) des blocs de données, soit une fois toutes les deux secondes, ce qui génère donc un flux de données d'environ 6 Mo/minutes pour chaque client. En outre, chaque requête du fichier sollicite le serveur et utilise ses ressources, au risque de dégrader ses performances.

Il existe donc un besoin d'améliorer les propositions actuelles de l'état de la technique, afin de minimiser l'occupation de cette bande passante pour des clients utilisant une fonction de lecture différée d'un contenu disponibles en séquence de blocs de données.

### EXPOSÉ DE L'INVENTION

À ces fins, selon un premier aspect, la présente invention peut être mise en oeuvre par un procédé de gestion de l'accès par un client à un contenu disponible sur au moins un serveur à travers un réseau de télécommunications, ledit contenu étant temporellement segmenté en une séquence de blocs de données, ledit procédé comprenant une transmission par ledit serveur d'un fichier associant des segments de temps à des identifiants de blocs de données, ainsi qu'une action sélectionnée parmi une génération par ledit client au sein dudit fichier d'au moins un identifiant de bloc associé à un segment de temps et une transmission d'une requête vers ledit serveur pour recevoir à nouveau ledit fichier.

Ainsi, dans le cas où le contenu est accédé en lecture différée, le fichier référençant les blocs de données n'est plus récupéré auprès du serveur de données, puisque le client ne va pas immédiatement utiliser les nouveaux blocs de données produits par le serveur. On évite ainsi de solliciter les ressources du serveur et des réseaux de télécommunications.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite action est sélectionnée en fonction d'une comparaison d'un intervalle entre un temps courant et un segment de temps en cours d'affichage avec un seuil. Ce mécanisme permet alors une autoadaptation en anticipant sur un besoin à venir de récupérer des blocs de données.
- ladite génération est effectuée périodiquement, pour un nombre de segments de temps correspondant à ladite période. Ainsi, le contenu du fichier est maintenu synchronisé avec la production des blocs de données sur le serveur de contenu.
- ladite période correspond à une durée constante desdits segments de temps. De la sorte, la synchronisation est aussi précise que possible.
- l'identifiant généré est adapté pour être déterminé par ledit client comme ne correspondant pas audit au moins serveur.
- le procédé comporte en outre, lorsqu'un identifiant généré par le client au sein dudit fichier lors d'une préparation d'une requête d'un bloc de données est détecté, une transmission d'une requête vers ledit serveur pour recevoir à nouveau ledit fichier. Ces modes de réalisation permettent de ne pas modifier les autres éléments logiciels du client, notamment l'application d'affichage du contenu média. En particulier ceux-ci vont détecter automatiquement qu'un identifiant contenu dans le fichier doit faire l'objet d'un traitement particulier, notamment la récupération du fichier manifeste auprès du serveur de contenu.
- un indicateur de position est affiché pour positionner ledit segment de temps en cours d'affichage en fonction des identifiants de blocs présents au sein dudit fichier. Ainsi, l'utilisateur peut à tout moment connaître le décalage entre ce qu'il est en train de regarder et le contenu produit par le serveur de contenu.
- ce contenu peut être un contenu diffusé en direct, mais elle peut s'appliquer à d'autres sortes de diffusion d'un contenu multimédia.

Un autre aspect de l'invention concerne un client comprenant un processeur configuré pour réaliser les étapes de réception d'un fichier depuis un serveur de contenu, associant des segments de temps à des identifiants de blocs de données, ainsi que de réalisation d'une action sélectionnée parmi une génération au sein dudit fichier d'au moins un identifiant de bloc associé à un segment de temps et une transmission d'une requête vers ledit serveur pour recevoir à nouveau ledit fichier.

Un autre aspect de l'invention concerne un programme d'ordinateur apte à être mis en oeuvre sur un serveur web, le programme comprenant des instructions de code qui, lorsqu'il est exécuté par un processeur, réalise les étapes du procédé tel que précédemment défini.

Un autre aspect de l'invention concerne un support de données sur lequel a été mémorisé au moins une série d'instructions de code de programme pour l'exécution d'un procédé tel que précédemment défini.

D'autres caractéristiques et avantages de l'invention apparaîtront à la lecture de la description qui suit d'un mode de réalisation préféré de l'invention, donnée à titre d'exemple et en référence aux dessins annexés.

### BRÈVE DESCRIPTION DES DESSINS

la figure 1 illustre un contexte de mise en oeuvre d'un procédé selon des modes de réalisation de l'invention,
la figure 2 illustre un exemple d'architecture fonctionnelle d'un client selon un mode de réalisation de l'invention,
La figure 3 illustre un exemple d'interface homme-machine pour un client, selon des modes de réalisation de l'invention.

### EXPOSÉ DÉTAILLÉ DE MODES DE RÉALISATION PARTICULIERS

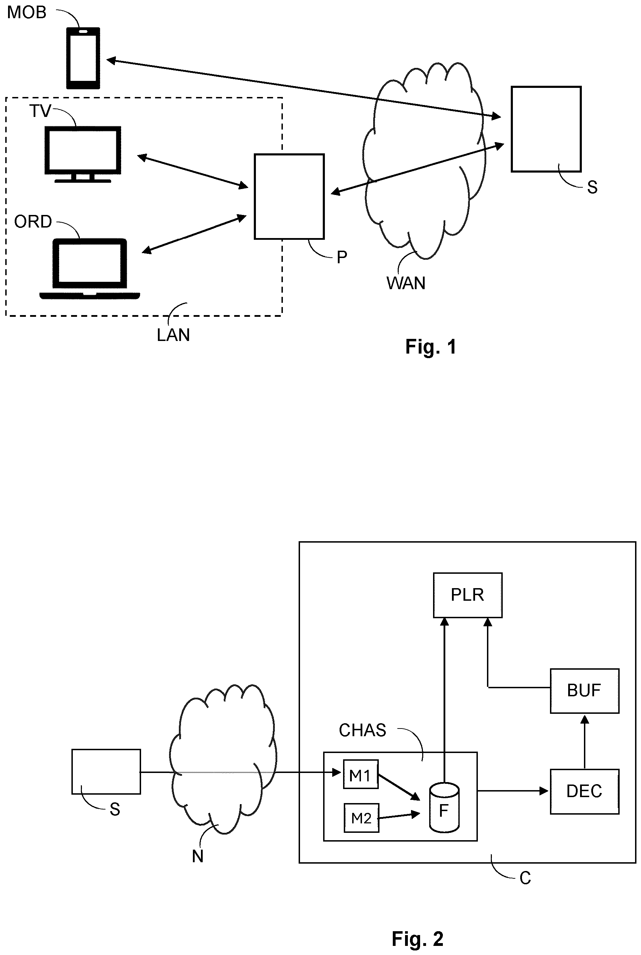

Sur la **figure 1** est illustré un réseau de télécommunication WAN permettant d'acheminer des flux de données représentant un contenu audio-visuel, depuis un serveur de contenu S vers des clients MOB, TV, ORD.

Ces contenus peuvent typiquement être des contenus diffusés « en direct » (ou *« live streaming* » en anglais), c'est-à-dire dont la détermination est mise à jour dans le temps. En général, ces contenus sont diffusés au moment de leur production.

Il peut par exemple s'agir de contenus télévisuels, de type IPTV (sigle de « *Internet Protocol Télévision* » en anglais), mais d'autres modes de transmission sont également envisageables.

Le serveur est accessible aux clients via un ou plusieurs réseaux de télécommunications interconnectés, notamment un réseau d'accès permettant aux clients de se connecter à un réseau principal WAN (lui-même constitué d'une interconnexion de sous-réseaux) ou « *backbone* » en anglais. Ce réseau WAN est communément appelé Internet.

Les clients peuvent être connectés à un réseau local, LAN, par exemple un réseau local sans fil, leur permettant d'accéder à une passerelle vers le réseau d'accès à Internet. Ce réseau local sans fil, communément appelé WLAN pour « *Wireless Local Area Network »* en anglais peut être conforme aux protocoles Wi-Fi, ou wifi, tels que spécifiés dans les documents normatifs de l'IEEE de la famille 802.11 (ou ISO/CEI 8802-11).

Ce réseau local LAN peut être un réseau interne à un domicile (réseau domestique), par exemple, permettant de connecter tous les équipements, ou clients, d'un utilisateur ou d'une famille. Le réseau local LAN peut également être un réseau interne d'une entreprise, permettant de connecter les équipements, ou clients, des différents utilisateurs de l'entreprise.

Une passerelle P peut être prévu pour permettre le raccordement du réseau local LAN au réseau internet, WAN.

Les clients peuvent être de différentes natures, un point commun étant de disposer de moyens permettant la connexion au réseau. Il s'agit essentiellement de composants de radiocommunication et de composants électroniques et informatiques permettant la mise en oeuvre des piles protocolaires nécessaires à la gestion des protocoles associés au réseau et à la réception et à l'émission de paquets de données.

Les clients peuvent également lire des contenus audio-vidéos. Ceux-ci peuvent être ensuite affichés sur un écran contenu ou associé aux clients, ou bien via un projecteur, ou bien via des haut-parleurs, par exemple, dans le cas d'un contenu uniquement audio (radio...).

Les clients C1, C2 peuvent être de différentes natures : ordinateur (portable ou fixe), terminal mobile de communication de type « smartphone », tablette numérique, téléviseur connecté, etc.

Le téléviseur peut être nativement connecté ou l'être par le truchement d'un dispositif associé tel que par exemple une clé TV connectée au téléviseur, généralement en HDMI. Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Ces différents clients sont également prévus pour la réception et le traitement des blocs de données de contenu.

En particulier, ils peuvent disposer d'une application logicielle (par exemple un navigateur ou « *browser* » en anglais) permettant d'accéder à des serveurs web ou autres, qui permettent de mettre à disposition des contenus audio-vidéos aux utilisateurs des clients. Ainsi, les différents échanges entre les clients et les serveurs de contenus S peuvent se faire conformément aux protocoles couramment utilisés sur le réseau Internet, notamment le protocole HTTP.

La diffusion en flux adaptatif dynamique sur HTTP (en anglais : « *Dynamic Adaptive Streaming over http* ») souvent nommé DASH ou MPEG-DASH ou encore HAS (pour « *HTTP Adaptive Streaming* » en anglais) est un standard de format de diffusion audiovisuelle sur Internet.

Plus généralement, ce mode de distribution est typiquement appelé ABR pour *« Adaptive Bit* Rate » en anglais.

Ce type de contenu est temporellement segmenté en une séquence de blocs de données, ou « *chunks* » en anglais. Les blocs de données correspondent chacun à un segment de temps.

A un même segment de temps, plusieurs blocs de données être disponibles, correspondant chacun à une résolution donnée.

Ainsi, une fonction déployée sur une entité connectée au réseau WAN (par exemple le serveur de contenu S) consiste à découper le contenu, au fur et à mesure de sa production dans le cas d'un contenu en direct, en segments de temps et à encoder chaque parcelle de contenu correspondant à ce segment de temps en autant de blocs de données que de résolutions qu'il est souhaité de mettre à disposition des différents clients.

Ces segments de temps peuvent correspondre à des durées très courtes, de l'ordre de quelques secondes (par exemple 2 secondes, ou 10 secondes). En conséquence, un contenu est constitué d'un très grand nombre de blocs de données.

Les résolutions correspondent à des qualités du contenu vidéo (et/ou audio) et conséquemment à des débits différents sur le réseau de télécommunication.

Les qualités disponibles en ABR peuvent varier en fonction de la plateforme de streaming vidéo utilisée, mais en général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

Il est important de noter que les qualités disponibles peuvent varier en fonction des capacités de bande passante de l'utilisateur et du réseau, ainsi que de la qualité et de la complexité du contenu vidéo diffusé, et du niveau de performance des encodeurs.

Dans la mesure où les blocs de données correspondent à des segments de temps très court, la transmission du contenu peut être réactivement adaptée aux conditions du réseau de télécommunication, en basculant d'une résolution à l'autre pour le(s) segment(s) de temps suivant en fonction de la bande passante disponible sur le réseau

Un fichier est prévu pour associer les segments de temps dans lequel le contenu est temporellement segmenté à des identifiants de blocs de données.

Ce fichier peut donc mettre en correspondance un segment avec plusieurs identifiants de blocs de données, lorsque plusieurs résolutions sont disponibles. Le fichier permet aux clients d'être informés des résolutions disponibles et de pouvoir ainsi sélectionner une résolution en fonction des qualités perçues de l'affichage du contenu lors des segments temporels (cette qualité dépendant notamment de la bande passante disponible sur les réseaux WAN, LAN).

Ce fichier est communément appelé « manifeste » ou « *manifest* » en anglais.

Différents formats de tels fichiers « manifestes » peuvent être utilisés. Ils peuvent par exemple être au format XML. La norme ISO/IEC 23009 finalisée fin 2011 définit le format du manifeste ainsi que celui des blocs de données basés sur des formats de conteneur MPEG : ISO Base Media File Format (ISO/IEC 14496-12) et MPEG-2 Transport Stream (ISO/IEC 13818-1), et donne des indications pour la définition d'autres formats de blocs.

Les identifiants des blocs de données peuvent également prendre plusieurs formes. Ils comportent typiquement une adresse, ou tout autre « locateur », permettant de déterminer comment télécharger le bloc de données identifiés.

Dans le cadre d'une mise en oeuvre de type HAS basée sur le protocole http, cet identifiant peut être un URI (« *Uniform Resource Identifier* »). Il s'agit d'une courte chaîne de caractères identifiant une ressource sur un réseau physique ou abstraite, et dont la syntaxe respecte une norme d'Internet mise en place pour le World Wide Web (RFC 3986).

Selon ce mode de réalisation, les clients comportent alors des moyens (notamment une pile protocolaire TCP/IP avec des couches applicatives adéquats) pour télécharger les blocs de données identifiés par des URI au moyen de requêtes en HTTP (« *HyperText Transfer Protocol* ») ou éventuellement en FTP (« *File Transfert Protocol »).*

La **figure 2** illustre un exemple d'architecture fonctionnelle d'un client selon un mode de réalisation d'un procédé décrit. Sont également représentés un serveur de contenu S et un réseau de télécommunication N. Ce réseau de télécommunication peut correspondre au réseau Internet, WAN, de la figure 1 ou à une interconnexion de plusieurs réseaux, par exemple de ce réseau Internet et d'un réseau local LAN. Dans la mesure où le procédé décrit est indépendant du lien entre le serveur de contenu S et le client C, ce réseau N ne sera pas plus précisément décrit.

Dans l'exemple illustratif de la figure 2, le client C comporte un client applicatif CHAS adapté pour la mise en oeuvre des différents mécanismes et protocoles permettant de mettre en oeuvre le mécanisme HAS.

Le client CHAS (et donc, plus généralement, le client C) dispose des moyens pour télécharger les blocs de données depuis le serveur de contenu S afin de les produire (c'est-à-dire afficher dans le cas d'un contenu multimédia, notamment vidéo) sur une interface de visualisation (écran, projecteur...) au moyen d'une application d'affichage, ou « *player »* en anglais, PLR.

Le client C est donc adapté pour construire des requêtes à partir du fichier « manifeste », F, en y incorporant un identifiant de bloc de données, et à transmettre ces requêtes au serveur S afin de déclencher le téléchargement des blocs identifiés dans les requêtes.

Les blocs de données récupérés peuvent être décodés, au fil de l'eau, par un décodeur DEC puis mémorisés dans une mémoire BUF où ils peuvent être consommés par l'application d'affichage PLR.

Ce mécanisme étant bien connu de l'homme du métier, et bien décrit dans la littérature scientifique et technique, il ne sera pas davantage décrit dans la présente Description.

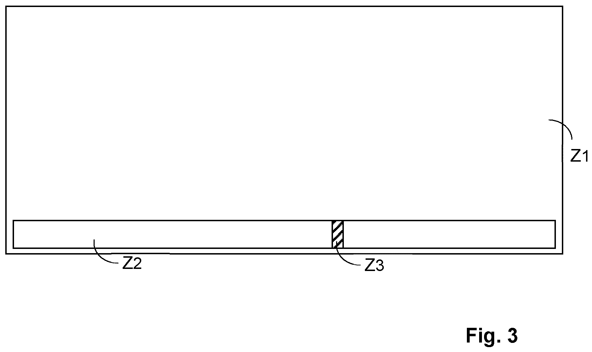

La **figure 3** illustre un exemple d'interface homme-machine pouvant correspondre à un client C. L'application d'affichage PLR peut afficher le contenu multimédia correspondant aux blocs de données décodés et consommés depuis la mémoire BUF dans une zone Z1 d'un écran, par exemple.

L'application PLR peut également afficher une zone Z2 représentant un axe des temps, dans lequel un indicateur de position Z3 peut être représenté. La position de l'indicateur Z3 dans l'axe des temps Z2 correspond à la position temporelle du segment de temps associé au bloc de données en cours d'affichage, au sein du contenu.

Dans le cas où le client affiche un contenu en direct en temps-réel (c'est-à-dire sans décalage temporel), l'indicateur Z3 est positionné à l'extrémité droite de la zone Z2, correspondant au temps présent.

Une position davantage vers la gauche correspond à une activation d'une fonction de lecture en différé (ou « *time-shifted playback* » en anglais, ou encore « *start over »).* Cette fonction permet à l'utilisateur de décaler l'affichage vers des segments de temps antérieurs : il peut ainsi visualiser le contenu produit dans le passé. Cette fonction lui permet de revoir certains segments, de rattraper le contenu s'il a manqué le début, etc.

La position de l'indicateur Z3 permet de lui donner une indication du décalage de l'affichage par rapport au direct.

Également, l'interface peut être prévu pour lui permettre de déplacer (par exemple au moyen d'un télécommande) la position de cet indicateur Z3 au sein de l'axe des temps Z2, afin de déterminer un nouveau décalage temporel de l'affichage. Une telle commande déclenche alors le téléchargement des blocs de données associés aux segments de temps du contenu correspondant à la nouvelle position de l'indicateur Z3.

Afin de positionner l'indicateur Z3 au sein de l'axe des temps Z2, l'application d'affichage PLR peut se baser sur le fichier F.

Celui-ci contient en effet l'ensemble des associations blocs de données / segments de temps. Connaissant le bloc de données en cours d'affichage, il peut donc directement déduire sa position temporelle en fonction des identifiants présents dans le fichier F (correspondant à autant de segments de temps) et, déterminer la position de l'indicateur Z3 au sein de l'axe des temps Z2 qui correspond à l'ensemble des segments de temps disponibles dans ce fichier F.

Le procédé décrit porte essentiellement sur la récupération du fichier F, et sa construction. Cette construction du fichier F est préférentiellement effectuée de sorte que les mécanismes existants relatifs à son utilisation pour la récupération des blocs de données puissent être mis en oeuvre sans modification. Ainsi, un avantage atteint est de ne pas avoir à modifier l'application PLR qui peut être conforme à l'état de la technique.

Dans l'état de la technique, le fichier F est récupéré régulièrement auprès du serveur S. Typiquement cette récupération a lieu en synchronisation temporelle avec la consommation des blocs de données par l'application d'affichage PLR : ainsi, si les blocs de données correspondent à des segments de 2 secondes, alors le fichier F est récupéré toutes les 2 secondes auprès du serveur S. De la sorte, l'affichage de l'indicateur Z3 est correctement positionné par rapport à une ligne des temps Z2 qui correspond effectivement aux segments disponibles pour le contenu sur le serveur S, donc au « temps réel » du direct.

On a vu toutefois qu'un tel mode de réalisation peut entraîner de nombreux désavantages notamment liés à l'encombrement du lien entre le serveur S et le client C, et aux traitements nécessaires engendrés par ces transmissions sur le serveur S.

Selon le procédé proposé, le client sélectionne une action parmi :
- une génération d'un ou plusieurs identifiants de blocs de données (associé à un segment de temps), et
- une transmission d'une requête au serveur S pour recevoir le fichier F.

Selon un mode de réalisation, cette sélection peut être effectuée en fonction d'un intervalle de temps entre le temps courant et le segment en cours de lecture. D'autres critères peuvent être également envisagés pour la sélection d'une action, par exemple basés sur des événements sur une interface humain-machine du dispositif de lecture : en effet, les choix de l'utilisateur de déplacer l'instant de visualisation, la sélection d'un mode de lecture en différé « *start over »* par exemple, peuvent générer la sélection d'une action par le client.

Ainsi, selon ce procédé, la récupération du fichier F n'est mise en place que dans une branche de l'alternative. Dès lors, le fichier F est mis à jour sur le serveur S par l'insertion d'identifiants de blocs de données pour chaque nouveau segment de temps, mais ce fichier n'est plus récupéré (ou transmis) au client C.

Dans l'autre branche, au lieu de récupérer à nouveau le fichier F, celui-ci est complété localement, sans échange via le réseau de télécommunications N.

Également, dans cette autre branche, des identifiants sont supprimés afin de conserver un nombre constant d'identifiants dans le fichier F, correspondant à une fenêtre temporelle au sein de laquelle l'utilisateur peut naviguer dans le temps pour décaler la lecture du contenu.

Selon un mode de réalisation, si l'intervalle de temps permet de déterminer s'il y a lecture en différé ou en direct en comparant le segment de temps en cours d'affichage et un temps courant qui peut être issu de l'horloge interne et est représentatif de la production des blocs en données en direct sur le serveur S (On suppose que l'horloge du client est synchronisée avec celle du serveur).

Si l'intervalle de temps est nul (ou en dessous d'un certain seuil), alors cela signifie que l'affichage est en direct (ou au plus près du direct). Si l'intervalle n'est pas nul (ou supérieur à ce seuil), alors cela signifie que la lecture (ou affichage) est en différé (ou « playback »).

Le procédé repose sur l'idée que si la lecture (et l'affichage) des blocs de données est en différé par rapport au temps courant, correspondant au direct, alors les blocs de données proches du temps courant ne sont pas consommés prochainement par l'application d'affichage PLR. Aussi, il est considéré que la récupération des identifiants de ces blocs n'est pas un besoin immédiat et peut être repoussé dans le futur.

Il est constaté en outre que le contenu du fichier F varie que très progressivement. Si ce fichier correspond à 4 heures de contenu, par exemple, et que les segments de temps correspondent à des durées de 2 secondes, on peut aisément calculer qu'entre deux productions d'un bloc de données, le fichier reste constant à 99.987% (le remplacement de l'identifiant le plus ancien par un nouvel identifiant représentant une proportion de 0.013%).

Il est donc soumis que la transmission de ce fichier F à chaque production d'un nouveau bloc de données par le serveur S est contre-productive.

Dans la situation d'une lecture en différé, il est donc proposé que les blocs de données peuvent être générés localement, en utilisant des données non-récupérées sur le serveur S. Ces données peuvent être arbitraires.

Autrement dit, pour chaque segment à insérer dans le fichier F, correspondant à un nouveau segment de temps, une valeur arbitraire (ou plus généralement « non récupérées sur le serveur S ») peut être associée en tant qu'identifiant de blocs de données.

Pour toute insertion d'un ou plusieurs identifiants dans le fichier, un même nombre d'identifiants sont supprimés afin de conserver constant le nombre d'identifiants dans le fichier F. Les insertions sont effectuées en fin du fichier (correspondant aux segments de temps les plus récents) et les suppressions sont effectuées en début de fichier (correspondant aux segments de temps les plus anciens).

En conséquence, le nombre d'identifiants de blocs de données au sein du fichier correspondant toujours au nombre de segments de temps dans lequel le contenu est réellement segmenté par le serveur S à l'instant courant. Dès lors, l'application d'affichage PLR peut se baser sur l'information contenue dans le fichier « manifeste » F pour positionner l'indicateur Z3 sur la ligne de temps Z2.

Le mécanisme est donc transparent du point de vue de l'application d'affichage PLR à cet égard.

Afin de synchroniser l'indicateur Z3 avec la production des blocs de données sur le serveur S, la génération du ou des identifiants est fait par le client périodiquement, pour un nombre de segments correspondant à cette période (c'est-à-dire au lapse de temps entre deux générations). Autrement dit, si le client génère des identifiants de blocs toutes les x secondes, alors il génère des identifiants correspondant à un intervalle de temps de x secondes, afin de garder la synchronisation.

Préférentiellement, cette période correspond à une durée constante qui est celle des segments de temps. Autrement dit, dans ce mode de réalisation, chaque fois qu'un bloc de données est consommé par l'application d'affichage PLR, un nouvel identifiant est généré et inséré dans le fichier F. De la sorte, la position de l'indicateur Z3 est toujours au plus près de la réalité.

Dans l'exemple illustratif de la figure 2, le fichier F peut ainsi être fournis à la fois par un module M1 conventionnel adapté pour récupérer ce fichier auprès du serveur S, et par un module M2 adapté pour générer localement des identifiants et à les insérer au sein de ce fichier F afin de le mettre à jour, régulièrement.

L'identifiant généré par le client est adapté pour être déterminé, ou détecté, par ce même client comme ne correspondant pas au serveur de contenu S. En particulier, il peut s'agir d'un identifiant ne correspondant pas au champ d'identifiants correspondant au serveur. Il peut s'agir d'un identifiant dont la valeur est connue par le client afin de pouvoir être immédiatement détectée.

On comprend qu'au fil du temps le client accède aux identifiants de blocs de données du fichier F dans un ordre chronologique si l'utilisation effectue une lecture linéaire du contenu.

Au bout d'un certain temps lors de ce processus de lecture, le client accède à un identifiant généré par le client. Cet identifiant n'étant pas fourni par le serveur de contenu S, il ne permet pas de récupérer le bloc de données correspondant.

Le client C peut toutefois détecter directement cette situation, ainsi que précédemment indiqué. Selon un mode de réalisation, lorsqu'un tel identifiant est détecté lors de la préparation d'une requête pour récupérer un bloc de données, le client transmet une requête pour recevoir à nouveau le fichier F.

Ce fichier F a été mis à jour en parallèle. La réception du fichier F permet ainsi de synchroniser les informations disponibles sur le client avec celles disponibles sur le serveur S. Le client peut alors poursuivre en transmettant des requêtes en blocs de données sur la base du fichier F mis à jour.

Si l'application d'affichage continue de fonctionner en mode de lecture différé, le procédé décrit va continuer à générer des identifiants localement, plutôt de récupérer le fichier F sur le serveur, jusqu'à ce que l'affichage arrive au dernier segment de temps récupéré sur le serveur S, et le même processus de récupération est alors mis en oeuvre.

Ainsi, le nombre de récupération du fichier F, en cas de lecture en différé, est drastiquement réduit, ce qui permet de réduire la consommation de façon importante et de soulager les serveurs de contenus, sans pour autant impacter l'expérience utilisateur.

Comme on a vu précédemment, lorsqu'on l'affichage est en direct, ou proche du direct, l'intervalle de temps entre le temps courant et le segment de temps en cours de lecture est nul ou faible (inférieur à un seuil). Dans ce cas, le fichier F peut être récupéré à chaque consommation d'un bloc de données, (donc, en général, à chaque génération d'un bloc de données par le serveur S), conformément au mécanisme de l'état de la technique.

Selon le procédé proposé, le client sélectionne l'action la plus appropriée à chaque itération, c'est-à-dire à chaque fois que le fichier F doit être mis à jour. De la sorte, un compromis optimum est atteint entre la minimisation de la consommation de bande passante sur le réseau N et l'obtention de la qualité de service QoS attendue pour les utilisateurs du client C. Le client C met ainsi en oeuvre une gestion optimisée des fichiers manifestes.

Bien entendu, la présente invention n'est pas limitée aux exemples et au mode de réalisation décrits et représentés, mais est défini par les revendications. Elle est notamment susceptible de nombreuses variantes accessibles à l'homme de l'art

Bien entendu, la présente invention n'est pas limitée aux exemples et au mode de réalisation décrits et représentés, mais est définie par les revendications. Elle est notamment susceptible de nombreuses variantes accessibles à l'homme de l'art.

## Revendications

1. Procédé de gestion de l'accès par un client (C) à un contenu disponible sur au moins un serveur (S) à travers un réseau de télécommunications (N), ledit contenu étant temporellement segmenté en une séquence de blocs de données, ledit procédé comprenant une transmission par ledit serveur d'un fichier (F) associant des segments de temps à des identifiants de blocs de données, ainsi qu'une action sélectionnée parmi une génération par ledit client au sein dudit fichier d'au moins un identifiant de bloc associé à un segment de temps et une transmission d'une requête vers ledit serveur pour recevoir à nouveau ledit fichier (F).

2. Procédé selon la revendication précédente, dans lequel ladite action est sélectionnée en fonction d'une comparaison d'un intervalle entre un temps courant et un segment de temps en cours d'affichage avec un seuil.

3. Procédé selon l'une des revendications 1 ou 2, dans lequel ladite génération est effectuée périodiquement, pour un nombre de segments de temps correspondant à ladite période.

4. Procédé selon la revendication précédente, dans lequel ladite période correspond à une durée constante desdits segments de temps.

5. Procédé selon l'une des revendications 1 à 3, dans lequel l'identifiant généré est adapté pour être déterminé par ledit client comme ne correspondant pas audit au moins serveur.

6. Procédé selon l'une des revendications précédentes, comportant en outre, lorsqu'un identifiant généré par le client au sein dudit fichier lors d'une préparation d'une requête d'un bloc de données est détecté, une transmission d'une requête vers ledit serveur pour recevoir à nouveau ledit fichier.

7. Procédé selon l'une des revendications précédentes, dans lequel un indicateur de position (Z3) est affiché pour positionner ledit segment de temps en cours d'affichage en fonction des identifiants de blocs présents au sein dudit fichier.

8. Procédé selon l'une des revendications précédentes, dans lequel ledit contenu est un contenu diffusé en direct.

9. Client (C) comprenant un processeur configuré pour réaliser les étapes de réception d'un fichier (F) depuis un serveur de contenu, associant des segments de temps à des identifiants de blocs de données, ainsi que de réalisation d'une action sélectionnée parmi une génération au sein dudit fichier d'au moins un identifiant de bloc associé à un segment de temps et une transmission d'une requête vers ledit serveur pour recevoir à nouveau ledit fichier (F).

10. Programme d'ordinateur apte à être mis en oeuvre sur un terminal de lecture de flux multimédia, le programme comprenant des instructions de code qui, lorsqu'il est exécuté par un processeur, réalise les étapes du procédé définie dans les revendications 1 à 8.

11. Support de données sur lequel a été mémorisé au moins une série d'instructions de code de programme pour l'exécution d'un procédé selon l'une des revendications 1 à 8.
